# EUROPEAN PATENT APPLICATION

(11) **EP 2 236 890 A2**
(43) Date of publication of application: **06.10.2010**
(21) Application number: 10007508.4
(22) Date of filing: 04.12.2008
(51) Int. Cl.: F16L 15/06, F16L 47/32, F16K 27/00, F16K 35/02, F24D 19/08

(54) **Fluid manifold for a heating and/or cooling system**

(30) Priority: 06.12.2007 EP 07076052
(62) Divisional of application: 08856525.4
(71) Applicant: Wavin B.V., 8011 CW Zwolle (NL)
(72) Inventor: Snijders, Johannes Hendrikus Gerhardus, 7701 BS Dedemsvaart (NL); Treep, Marco, 7701 BS Dedemsvaart (NL); Vos, Bastiaan, 7701 BS Dedemsvaart (NL)
(74) Representative: de Vries, Janna

(57) **Abstract**

The invention relates to an adjustment device (201) for integration in a fluid manifold of a heating and/or cooling system, comprising:
- a fluid tight body (3) comprising:
- a first fluid passage (4,5) for passing a fluid in and/or out of the fluid tight body,
- a manifold port (6) for in use exchanging the fluid with the heating and/or cooling system,
- an adjustment means (204) for adjusting said fluid exchange, which adjustment means is adjustable by rotating a spindle member (208) relative to the fluid tight body,
- a positioning member (205) for restricting the rotation of the spindle member (208), which positioning member (205) is displaceable between a first member position (206) in which the positioning member (205) is rotatable substantially about the rotation axis of the spindle member (208) and a second member position (207) in which said rotation of the positioning member is blocked,
characterised in that the spindle member (208) is displaceable between a first spindle position (210) in which the rotation of the spindle member (208) is rotatable and a second spindle position (211) in which the spindle member (208) is blocked.

## Description

The invention relates to a manifold segment, a filling and venting device and an adjustment device for a heating and/or cooling system.

A first aspect of the invention relates to a manifold segment for integration in a fluid manifold for a heating and/or cooling system, comprising a fluid tight body comprising a fluid passage for passing fluid in and/or out of the fluid tight body, wherein the fluid passage comprises thread means for in use connecting said fluid passage to the manifold, such that the manifold segment is positioned in a fixed position relative to said manifold.

Such a manifold segment is known from EP 0872598. The manifold segment is used for constructing a manifold. This is done by connecting several manifold segments to each other. The fluid passage of one manifold segment comprises thread means which correspond with the tread means of a further manifold segment to which it in use is connected. When the manifold segments are connected together, the manifold segments are located in a specific position relative to each other. In EP 0872598 each manifold segment comprises one manifold port and in said specific position the manifold ports of the connected segments direct in the same direction.

A disadvantage of the known manifold segment is that in use the manifold can not be adapted to the space in which it is placed. Manifolds are generally placed in narrow spaces. When installing the manifold, the installer is often confronted with the situation in which the installation would be easier if one of more manifold segments could be positioned in a different position relative the further manifold segments. For example, if one or more of the manifold ports would direct in the opposite direction of the manifold ports of the further manifold segments.

It is an objective of the first aspect of the invention to provide a manifold segment for a manifold which can be adapted to the space in which the manifold is installed. It is a further object of the invention to provide such a manifold segment with a simple construction.

This object of the first aspect of the invention is achieved thereby that the thread means of the manifold segment comprise a multi thread by which the manifold segment is in use connectable in at least one further fixed position with a different angular orientation relative to the manifold. The multi thread provides a simple construction by which the manifold segment is connectable in more than one fixed position to the manifold without having to use additional parts or tools.

In an embodiment of the manifold segment, the multi thread is a double thread and the manifold segment is in use connectable to the manifold in two fixed positions. Said two fixed positions may be located 180 degrees from each other about the centre line of the fluid passage. This allows for example that in the case that each segment comprises one manifold port, said manifold ports may in one fixed position direct in the same direction and in the other fixed position direct in opposite directions.

In a further embodiment the multi thread is a triple thread and the manifold segment is in use connectable to the manifold in three fixed positions. Said three fixed positions may be located 120 degrees from each other about the centre line of the fluid passage. The multi thread may also be a quadruple thread such that a manifold segment is in use connectable to the manifold in four fixed positions. Said four fixed positions may be located 90 degrees from each other about the centre line of the fluid passage.

In another embodiment the manifold segment comprises positioning means which are configured such that the positioning means in use block the threading of the manifold segment beyond one of the fixed positions. The positioning means ensure that in use the manifold segment is positioned in the correct position. The positioning means may comprise blocking means for in use blocking the movement of the manifold segment out of one of the fixed positions. The blocking means may comprise a segment protrusion or a segment receiving member which in use co-operates with a segment receiving member or a segment protrusion of the further manifold segment, respectively. The blocking means ensure the fixation of the manifold segment in one of the fixed position.

In a further embodiment the manifold segment comprises two fluid passages, which fluid passages are in fluid connection with each other, and wherein one of the fluid passages comprises a male connection and the other of the fluid passages comprises a female connection. The fluid passages may substantially direct in opposite directions and may be substantially aligned. The manifold segment may also comprise more than two fluid passages.

The manifold segment may comprise a manifold port for in use exchanging fluid with the heating and/or cooling system. The centre line of the manifold port may extend substantially perpendicular to the centre line of fluid passages. The centre line of the manifold port and the centre line of the fluid passage may extend relative to each other under an angle of more than 90 degrees or less than 90 degrees. The manifold segment may comprise more than one manifold port. The manifold segment may comprise an adjustment port for holding an adjustment means for in use adjusting the fluid exchange of the manifold with the heating and/or cooling system. The adjustment port may comprise said adjustment means. The centre line of the adjustment port may extend substantially perpendicular to the centre line of the at least one fluid passage. The manifold port and the adjustment port may extend in opposite directions. The manifold segment may comprise more than one adjustment ports.

The invention also relates to an assembly comprising a plurality of manifold segments according the first aspect of the invention. The fluid passages of the manifold segments comprise corresponding thread means, for example a male connection and a female connection. Each of the manifold segments may comprise a manifold port. The manifold segments may be connectable to each other such that in one of the fixed positions of the manifold segments the manifold ports direct in the same direction. The manifold segments may be connectable to each other such that in one of the fixed positions of the manifold segments the manifold ports direct in opposite directions.

A second aspect of the invention relates to a filling and venting device for integration in a fluid manifold of a heating and/or cooling system, comprising a fluid tight body comprising a filling port for in use filling the heating and/or cooling system with a fluid, a first fluid passage for passing fluid in and/or out of the fluid tight body, a venting port for in use venting the heating and/or cooling system, wherein the filling port comprises a filling valve for opening and closing the filling port, and wherein the venting port comprises a venting valve for opening and closing the venting port. Such a filling and venting device is known from EP 1411302.

A disadvantage of the known filling and venting device is that said device comprises many different parts, which leads to a high production costs as well as the risk that during assembly wrong parts are used or correct parts are assembled at wrong places.

It is an object of the second aspect of the invention to provide a filling and venting device that is cheaper to produce and wherein the risk of assembling the filling and venting device incorrect is lower.

This object of the second aspect of the invention is achieved thereby that the filling valve and venting valve are identical.

In an embodiment of the filling and venting device according the invention, the filling and venting device comprises a second fluid passage for passing a fluid in and/or out the fluid tight body and the first and second fluid passage are in fluid connection with each other. The first fluid passage and/or the second fluid passage may comprise connection means for in use connecting to the manifold. This provides a simple construct for position the filling and venting valve at any location in the manifold, for example at the upstream end or in the middle of the middle of the manifold.

In a further embodiment of the filling and venting device, the filling valve and/or venting valve are located in the filling port and/or venting port respectively. This allows a compact and simple construction. The filling valve and/or the venting valve may comprise a fluid passage for passing a fluid. This provides a simple construction for filling or venting the heating and/or cooling system. The filling valve and/or venting valve may comprise connection means for in use connecting a fluid feed to the fluid channel of the filling and/or venting valve respectively. The filling valve and/or venting valve may comprise a rotatable member for adjusting the filling valve and or venting valve respectively. The connection means may be connected to the filling valve and or venting valve such that the rotatable member of the filling valve and/or venting valve is manually adjustable.

In an embodiment of the filling and venting device, the filling port and the venting port substantially direct in opposite directions. The filling port and the venting port may be substantially aligned. The centre line of the first fluid passage and/or the second fluid passage may extend substantially perpendicular to the centre line of the filling port and/or the centre line of the venting port. The first and second fluid passage may direct in opposite directions. The centre lines of the first and second fluid passage may extend relative to each other such that they define an angle which is smaller than 180 degrees.

The first and second fluid passage of the filling and venting device may comprise thread means. Said thread means may correspond with the thread means of the fluid manifold segment according to the first aspect of the invention. The first and second fluid passages may comprise thread means which correspond with the thread means of the assembly according the invention and/or the fluid manifold according the invention and/or the adjustment device according to the invention.

A third aspect of the invention also relates to an adjustment device for integration in a fluid manifold of a heating and/or cooling system, comprising a fluid tight body comprising a first fluid passage for passing a fluid in and/or out of the fluid tight body, a manifold port for in use exchanging the fluid with the heating and/or cooling system, an adjustment means for adjusting said fluid exchange, which adjustment means is adjustable by rotating a spindle member relative to the fluid tight body, a positioning member for restricting the rotation of the spindle member, which positioning member is displaceable between a first member position in which the positioning member is rotatable substantially about the rotation axis of the spindle member and a second member position in which said rotation of the positioning member is blocked.

Such an adjustment device is known from DE 20117196. When the positioning member is positioned in the second member position, the positioning member restricts the degree in which the adjustment means are adjustable. This means that the spindle is rotatable, but not further than the restriction of the positioning member. A disadvantage of the known device is that the adjustment means may be accidentally, such as by children, adjusted. These accidental adjustments cause that the heating and/or cooling system does not function as wished.

It is an object of the third aspect of the invention to provide an adjustment device which prevents said accidental adjustments of the adjustment means. This object is achieved in that the spindle member is displaceable between a first spindle position in which the rotation of the spindle member is rotatable and a second spindle position in which the spindle member is blocked. By placing the spindle member in the second position, the rotation of the spindle member is blocked, which means that the spindle member can not be rotated in any direction. Accordingly, in an adjustment device according to the invention both the positioning member and the spindle member may be locked in a pre-set position. This way the adjustment means can not be adjusted accidentally.

In an embodiment of the adjustment device according to the invention, the positioning member and/or the spindle member are substantially axially displaceable along the rotation axis of the spindle. For restricting the rotation of the spindle member, the positioning member may comprise a first protrusion and the spindle member may comprise a second protrusion. The first and second protrusion may collide when rotating the spindle member positioned in the first position. For blocking the rotation of the spindle member, the positioning member may comprise a first receiving member for receiving the second protrusion of the spindle member and/or the spindle member may comprise a second receiving member for receiving the first protrusion of the positioning member.

In a further embodiment, the positioning member has the form of a ring coaxial arranged relative to the spindle member. The adjustment device may comprise control means for controlling the temperature and/or the flow rate of the fluid which in use is exchanged with the heating and/or cooling system. The adjustment device may comprise a second fluid passage for passing a fluid in and/or out of the fluid tight body, wherein the first and second fluid passage are in fluid connection with each other. The first and/or second fluid passage may comprise thread means which correspond with the thread means of the manifold segment according to the invention and/or the filling and venting device according to the invention. The adjustment device may comprise an adjustment port in which the adjustment means are located. The adjustment device may be integrated in a manifold segment according to the invention.

The invention also relates to a fluid manifold for a heating and/or cooling system, comprising an adjustment device according to invention. Said fluid manifold may comprise a manifold segment according to the invention and/or a filling and venting device according to the invention. The invention also relates to a heating and/or cooling system comprising an adjustment device according to the invention

The invention also relates to a fluid manifold for a heating and/or cooling system, comprising at least one fluid manifold segment according to the invention and/or a filling and venting device according the invention and/or an adjustment device according the invention.

The invention also relates to a further disadvantage of the known filling and venting device of EP 1411302, which is that said device can only be connected to the downstream end of a manifold. Manifolds are generally placed in narrow spaces. Because the filling and venting device can only be connected to the downstream end of the manifold, the filling and venting device often is located at such a location that it is difficult to reach the filling and venting device for filling or venting the heating system.

It is an object of an aspect of the invention to provide a filling and venting device which is connectable to the manifold at more locations than only at the downstream end, so that the filling and venting device can be placed at the location which is in easy reach. This object is achieved by a filling and venting device for integration in a fluid manifold of a heating and/or cooling system, comprising a fluid tight body comprising a filling port for in use filling the heating and/or cooling system with a fluid, a first fluid passage for passing fluid in and/or out of the fluid tight body, a venting port for in use venting the heating and/or cooling system, wherein the filling port comprises a filling valve for opening and closing the filling port, the venting port comprises a venting valve for opening and closing the venting port and characterised in that the filling and venting device comprises a second fluid passage for passing a fluid in and/or out the fluid tight body, wherein the first and second fluid passage are in fluid connection with each other. The second fluid passage allows that the fluid of the heating and/or cooling device may flow through the filling and venting device. As a result of this, the filling and venting device can be installed at any location in the manifold.

A preferred embodiment of the manifold segment, filling and venting device, adjustment device and manifold according the invention will be discussed in detail with reference to the accompanying drawings in which;
figure 1 shows a side view of an embodiment of the manifold segment according the invention,
figure 2 shows a top view of the manifold segment of fig. 1,
figure 3 shows a further side view of the manifold segment of fig. 1,
figure 4 shows the side view of fig. 1 partially in cross section,
figure 5 shows a perspective view of the manifold segment of fig. 1,
figure 6 shows a perspective view of an embodiment of the filling and venting device according the invention,
figure 7A shows a side view in cross section of the filling and venting device of fig. 6 in a closed state,
figure 7B shows a side view in cross section of the filling and venting device of fig. 6 an open state,
figure 8A shows a side view of an embodiment of the adjustment device according the invention in an adjustable state,
figure 8B shows the side view of fig. 8A in cross section,
figure 8C shows an enlarge view of the positions of the spindle member and positioning member of fig. 8B.
figure 9A shows a side view of an embodiment of the adjustment device according the invention in an restricted state,
figure 9B shows the side view of fig. 9A in cross section,
figure 9C shows an enlarge view of the positions of the spindle member and positioning member of fig. 9B.
figure 10A shows a side view of an embodiment of the adjustment device according the invention in an blocked state,
figure 10B shows the side view of fig. 10A in cross section,
figure 10C shows an enlarge view of the positions of the spindle member and positioning member of fig. 10B,
figures 11 A-E show schematically a method of using an adjustment device according to the invention, and
figure 12 shows an embodiment of a fluid manifold the to according to the invention.

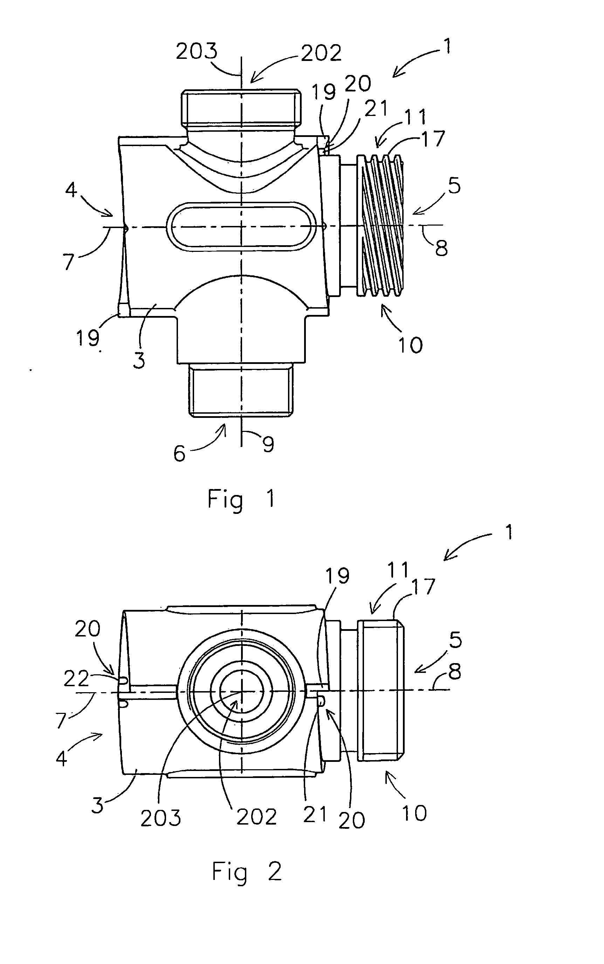

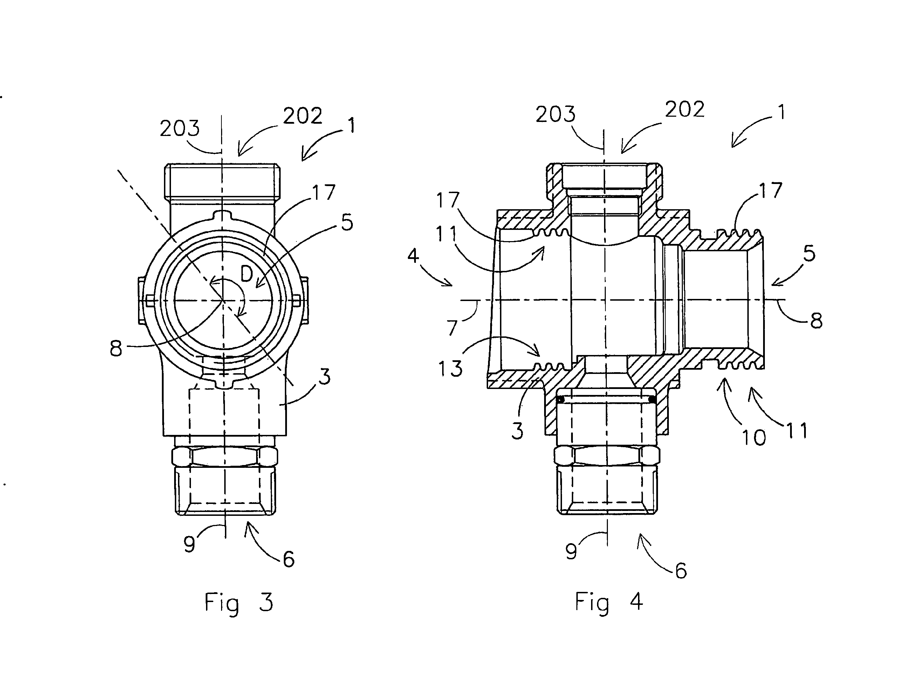

The figures 1 - 5 show an embodiment of the manifold segment 1 according the invention. The manifold segment 1 is configured for assembling a manifold for a heating and/or cooling system. The manifold segment 1 comprises a fluid tight body 3. The body 3 is provided with a first fluid passage 4 and a second fluid passage 5 for passing a fluid of the heating and/or cooling system. The fluid passages 4 and 5 are in fluid connection with each other. The first and second fluid passage comprise a first and second fluid passage centre line 7 and 8, respectively. Each of the fluid passages 4 and 5 comprise thread means 11 for in use connecting said fluid passage to the manifold. The thread means 11 of the first fluid passage 4 form a female connection 13 and the thread means 11 of the second fluid passage 5 form a male connection 10. The thread means 11 comprise a double thread 17. In fig. 3 is shown that the threads of the double thread 17 start from locations on the circumference of the second fluid passage 5 located D = 180 degrees from each other about the second fluid passage centre line 8. This means that, the manifold segment 1 is connectable to the manifold in two fixed positions with a different angular orientation. These two fixed positions are located D = 180 degrees from each other about the second fluid passage centre line 8. In the case that the thread means 11 comprise a triple thread, D would be 120 degrees. In the case that the thread means 11 comprise a quadruple thread, D would be 90 degrees.

The manifold segment 1 here further comprises positioning means 19 for blocking the threading of the manifold segment 1 beyond one of the fixed positions. The positioning means 19 here also comprise blocking means 20 for blocking the movement of the manifold segment 1 out of one of the fixed positions. The blocking means 20 in this example comprise a segment protrusion 21 and a segment receiving member 22.

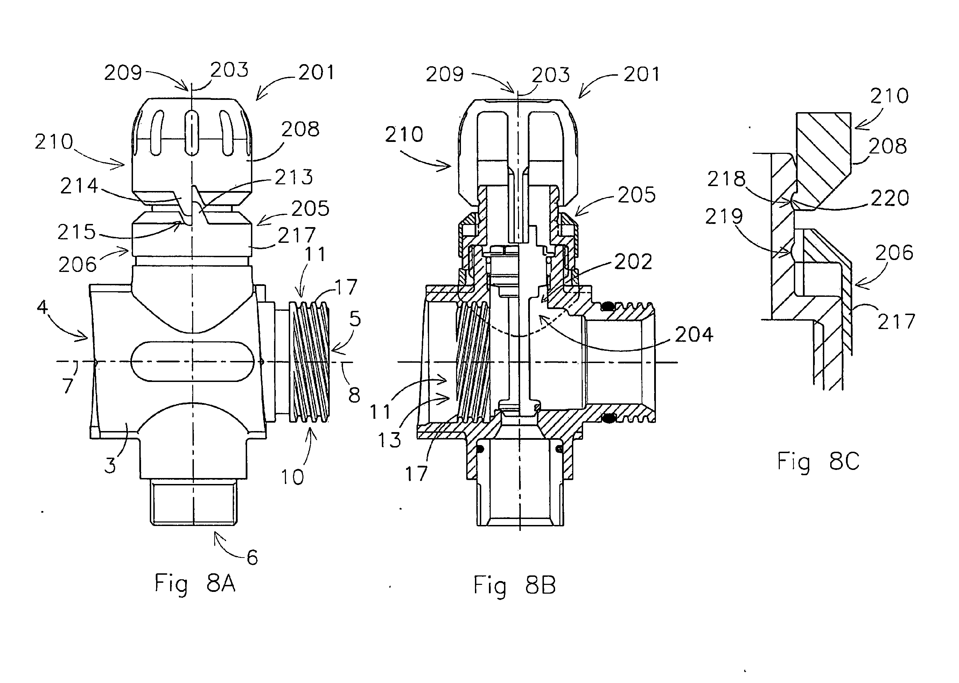

The manifold segment 1 comprises a manifold port 6 for in use exchanging fluid with the heating and/or cooling system. The manifold port 6 is in fluid connection with the fluid passages 4 and 5 and comprises a manifold port centre line 9. The manifold segment 1 furthermore comprises an adjustment port 202 which is in fluid communication with the fluid passages 4 and 5 and which comprises a adjustment port centre line 203. The adjustment port 202 may be used for holding adjustment means (see 204 of fig. 8-10), but may also be used for any other purpose.

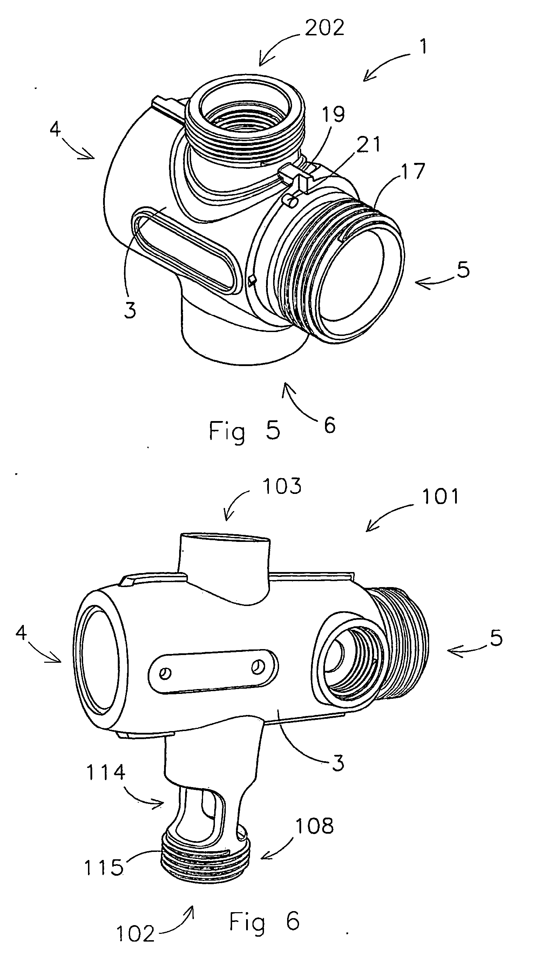

Figure 6 shows an embodiment of the filling and venting device 101 according the invention. The filling and venting device 101 comprises a fluid tight body 3 with a filling port 102 for filling the heating and/or cooling system with a fluid and a venting port 103 for venting. The filling and venting device 101 comprises further a first fluid passage 4 and a second fluid passage 5. In use a filling valve and a venting valve are positioned in the filling port and venting port, respectively.

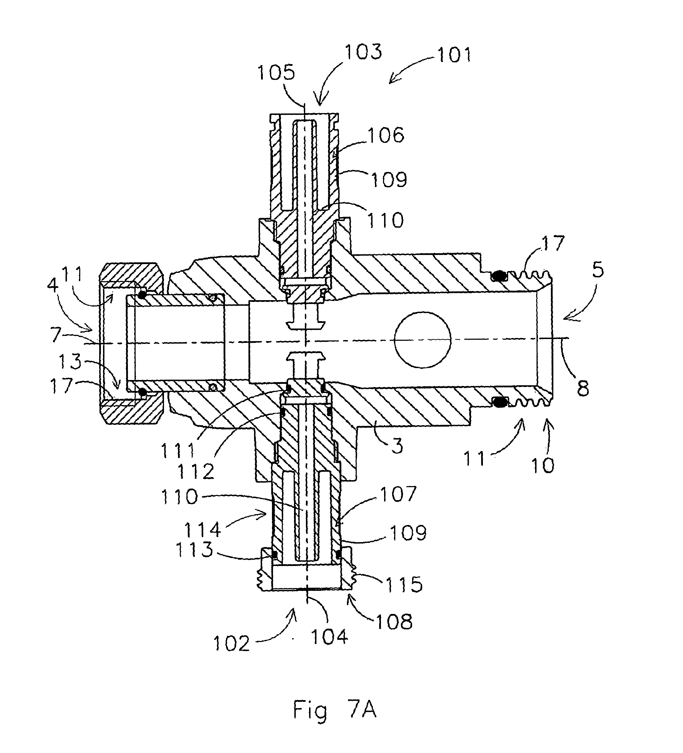

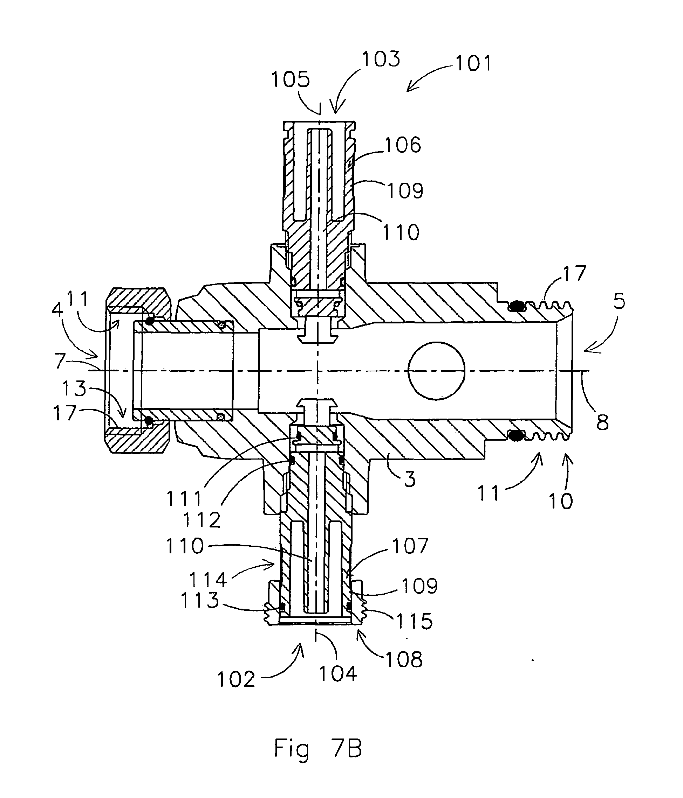

The figures 7A and B show a side view in cross section of the filling and venting device 101 of fig. 6 provided with a filling valve 107 and a venting valve 106. The filling and venting device 101 is in fig. 7A shown in a closed state and in fig. 7B in an open state.

The first and second fluid passage 4 and 5 comprise a first and second fluid passage centre line 7 and 8, respectively. The first fluid passage 4 comprises thread means 11a in the form of a female connection 13. The thread means 11a comprises a standard thread for connection to a threaded pipe end or fitting. The second fluid passage 5 comprises thread means 11 in the form of a male connection 10. The thread means 11 comprise a double thread 17. In a modification not shown also the fluid passage 4 may comprise a double thread for connection to another manifold segment. The filling port 102, venting port 103 and first and second fluid passages 4 and 5 are in fluid connection with each other. The filling and venting device 101 may comprise more than two fluid passages 4, 5.

The filling port 102 comprises a filling port centre line 104 and the venting port 103 comprises a venting port centre line 105. Provided is a filling valve 107 for opening and closing the filling port 102 and a venting valve 106 for opening and closing the venting port 103. The filling valve 107 and the venting valve 106 are identical. Each of the filling and venting valve 107 and 106 comprises a first sealing member 111 and a second sealing member 112 for sealing the filling and venting port 102 and 103 respectively. The first and second sealing members 111 and 112 may be an O-ring or any other sealing member known in the state of the art.

Connection means 108 are attached to the filling valve 107 for connecting a fluid feed to the passage 110 located in the filling valve 107. The fluid passage 110 of the venting valve 106 is used for the passage of fluid out of the heating and/or cooling system. The filling port 102 and the venting port 103 are opened and closed by rotating the filling valve 107 and the venting valve 106 respectively. Said valves 106, 107 are manually adjustable by using a rotatable member 109 provided on the valves 106, 107. The filling port 102 comprises openings 114 through which the rotatable member 109 of the filling valve 107 can be engaged for manually adjusting the filling valve 107. The connection between the filling valve 107 and the connection means 108 is sealed by a third sealing member 113, which may be an O-ring or any other sealing member known in the state of the art. The connection means 108 is provided with thread means 115.

For filling a heating and/or cooling system with a fluid, a fluid feed (not shown) is connected to the connection means 108. After that, the filling and venting valve 107 and 106 are opened and the fluid is fed through the filling port 102 into the heating and/or cooling system. When the heating and/or cooling system is filled, fluid will exit the filling and venting device 101 via the venting port 103. Subsequently, the filling and venting valve 107 and 106 are closed. After that the fluid feed may be disconnected from the connection means 108.

A further advantage of the filling and venting device 101 according the invention is that the filling valve 107 is positioned coaxially relative to the filling port 102. The longitudinal axis of the filling valve 107 coincides with the filling port centre line 104. This provides a compact structure which is easy to handle, when compared to the known filling and venting devices wherein the longitudinal axis of the filling valve extends perpendicular to the filling port centre line 104.

The figures 8-10 show an embodiment of the adjustment device according the invention. The adjustment device 201 comprises a fluid tight body 3. The body 3 comprises a first and second fluid passage 4 and 5 for passing fluid in and/or out of the fluid tight body 3 and a manifold port 6 for exchanging fluid with the heating and/or cooling system. The first and second fluid passages 4 and 5 and the manifold port 6 are in fluid communication with each other. The first and second fluid passages 4 and 5 comprise a first and second fluid passage centre line 7 and 8 respectively. The manifold port 6 comprises a manifold port centre line 9. The body 3 further comprises an adjustment port 202 with an adjustment port centre line 203 and in which adjustment means 204 for adjusting the fluid flow out of the manifold port 6 are provided. The adjustment means 204 is adjustable by rotating a spindle member 208 relative to the body 3 about a rotation axis 209. The spindle member 208 is rotatable over approximately 360 degrees. This means that by rotating the spindle member 208 over approximately 360 degrees the adjustment means 204 can be brought from a closed state into a fully open state. A positioning member 205 is provided for restricting the rotation of the spindle member 208. The positioning member 205 is displaceable between a first member position 206 in which the positioning member 205 is rotatable and a second member position 207 in which said rotation of the positioning member 205 is blocked. The positioning member 205 rotates substantially about the rotation axis 209 of the spindle member 208. The spindle member 208 is displaceable between a first spindle position 210 in which the rotation of the spindle member 208 is rotatable and a second spindle position 211 in which the spindle member 208 is blocked.

The positioning member 205 has the form of a ring 217 coaxially arranged relative to the spindle member 208. When moving the positioning member 205 and the spindle member 208 between their first and second positions, said members 205 and 208 are axially displaceable along the rotation axis 209. For restricting the rotation of the spindle member 208 the positioning member 205 comprises a first protrusion 213 and the spindle member 208 comprises a second protrusion 214. Said first and second protrusion 213, 214 collide when rotating the spindle member 208 positioned in the first position 210.

In fig. 8 the spindle member 208 is positioned in the first spindle position 210, in which the spindle member 208 is rotatable. The positioning member 205 is positioned in the first positioning member position 206, in which the positioning member 205 is rotatable. In this adjustable state the spindle member 208 can freely be rotated. Fig. 8C shows in an enlarged view that the adjustment port 202 comprises a first recess 218 and a second recess 219 and that the spindle member 208 comprises an edge 220. The function of these recesses 218 and 219 and the edge 220 is to secure the spindle member 208 in the first or second spindle position 210 and 211. In the first spindle position 210 the edge 220 of the spindle member 208 is received by the first recess 218, thereby securing the spindle member 208, in axial direction.

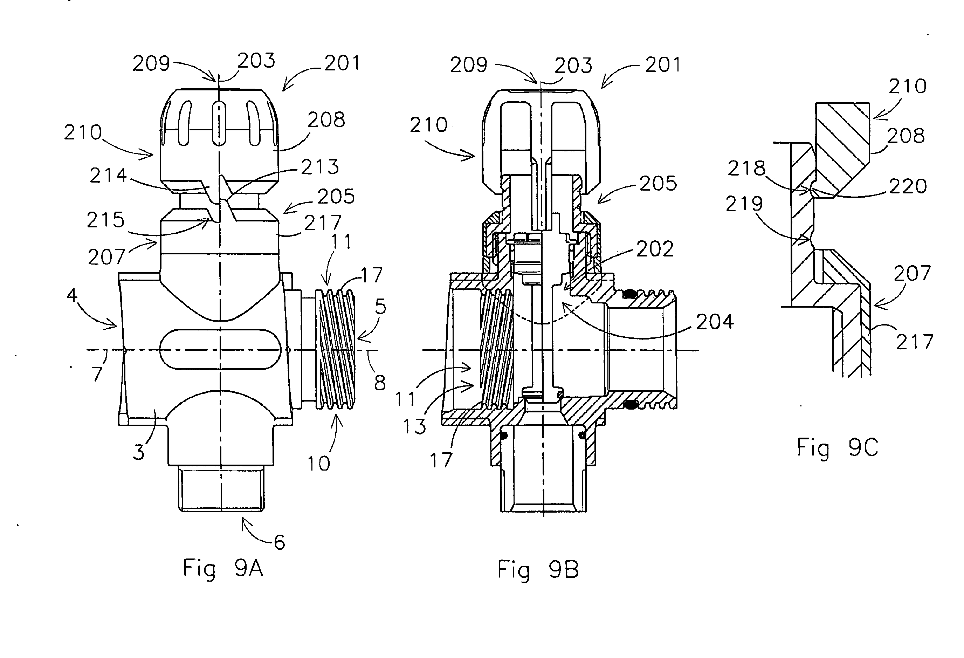

In fig. 9 the spindle member 208 is positioned in the first spindle position 210 and the positioning member 205 is positioned in the second positioning member position 207, in which the positioning member 205 is blocked from rotation by suitable blocking means (not shown). In this restricted state the rotation of the spindle member 208 is restricted by the positioning member 205. The second protrusion 214 of the spindle member 208 collides with the first protrusion 213 of the blocked positioning member 205.

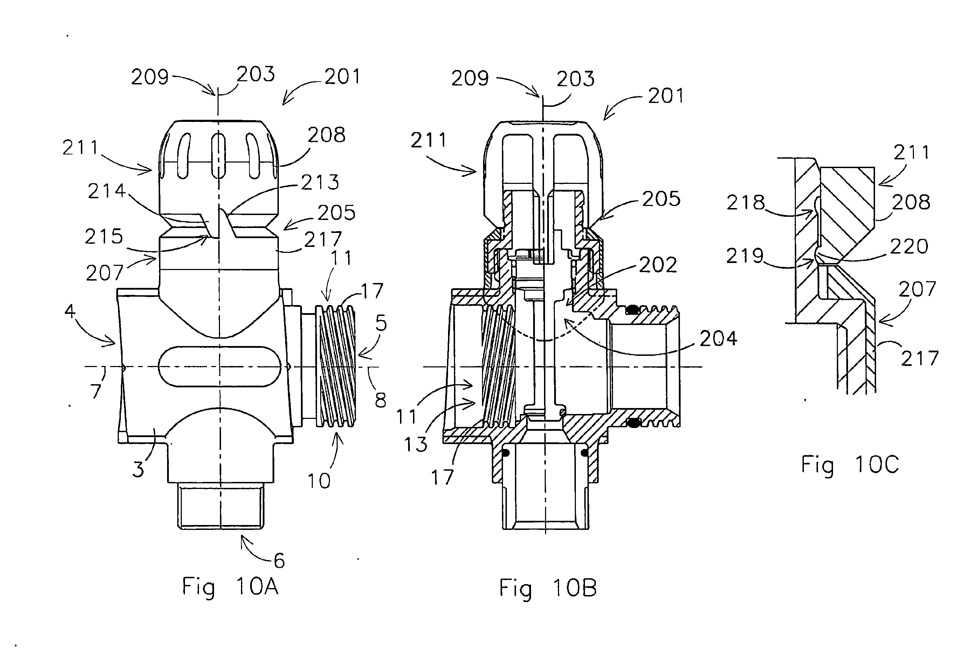

In fig. 10 the spindle member 208 is positioned in the second spindle position 211, in which the spindle member 208 is blocked from rotation. In this blocked state the rotation of the spindle member 208 is blocked by positioning member 205 which is positioned in his second position 207. The second protrusion 214 of the spindle member 208 is received by a first receiving member 215 of the blocked positioning member 205. Fig. 10C shows that in the second spindle position 211 the edge 220 of the spindle member 208 is received by the second recess 219, thereby fixating the spindle member 208, in axial direction.

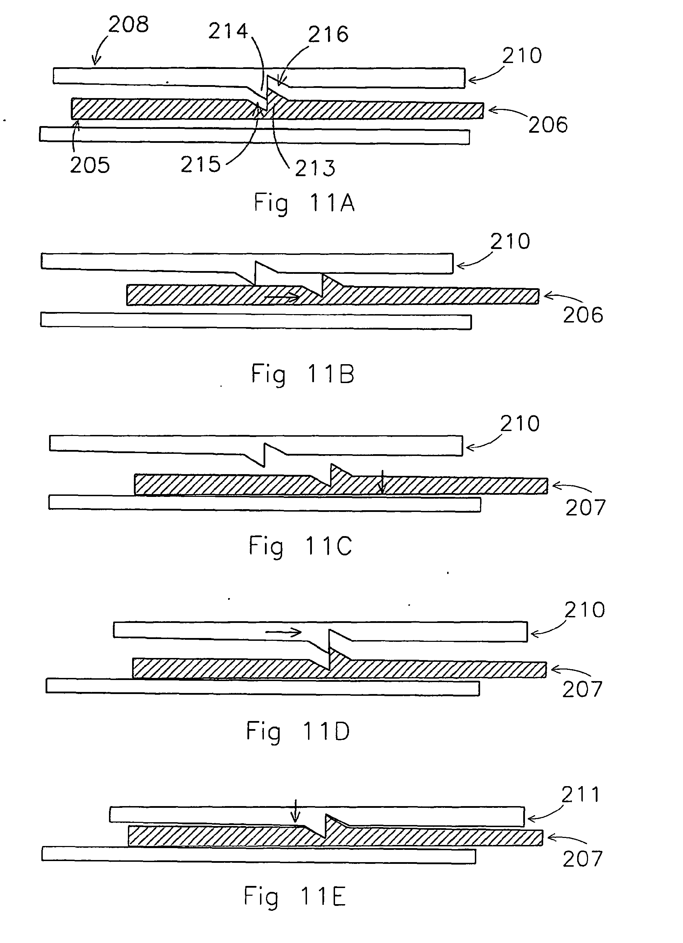

The figures 11 A-E show schematically a method of using an adjustment device according to the invention. In these figures, only the cooperating parts of the spindle member 208 and the positioning member 205 are shown. In fig. 11A the spindle member 208 and the positioning member 205 are positioned in their first position 210 and 206, respectively. In this situation both the spindle member 208 and the positioning member 205 are rotatable. In fig. 11B the positioning member 205 is rotated in a specific rotation position. In practice, this rotation position will correspond to the rotation position of the spindle member 208 in which the heating and/or cooling systems functions optimally. In fig. 11C the positioning member 205 is displaced substantially axially, in the direction of the arrow, to place it in its second position 207, in which it is blocked from rotation. In fig. 11D the spindle member 208 is rotated to the specific rotation position of the positioning member 205. In said rotation position the first protrusion 213 of the positioning member 205 collides with the second protrusion 214 of the spindle member 208. In fig. 11E the spindle member 208 is displaced substantially axially, in the direction of the arrow, to place it in its second position 211, in which it is blocked from rotation in both rotation directions. In said position, the first protrusion 213 of the positioning member 205 is received by the second receiving member 216 of the spindle member 208 and the second protrusion 214 of the positioning member 205 is received by the first receiving member 215 of the spindle member 208.

The spindle member 208 is rotatable over 360 degrees between a first and a second extreme rotation position. In the first extreme rotation position the adjustment means 204 are closed and in the second extreme rotation position said adjustment means 204 are fully opened. In use the spindle member 208 is placed in the first extreme rotation position. After that, the positioning member 205 is positioned in a rotation position that corresponds with the rotation position of the spindle member 208 in which the heating and/or cooling system functions optimally. The positioning member 205 is in that rotation position secured by placing it in the second member position 207. Then the spindle member 208 is positioned in said rotation position by rotating the spindle member 208 until it collides with the positioning member 205. The spindle member 208 is in said rotation position secured by placing it in the second spindle position 211. In the situation that one has to shut down the heating and/or cooling system, for example for maintenance of the system, the spindle member 208 can be placed in the first spindle position 210 and rotated back to the first extreme rotation position. The positioning member 205 is not moved. This way the adjustment device is closed 201 and the heating and/or cooling system is shut down, which is a requirement for working on the heating and/or cooling system. When the heating and/or cooling system can be brought back into operation, one only has to rotate the spindle member 208 towards the second extreme rotation position until it collides with the secured positioning member 205. At that moment, the spindle member 208 is located in the rotation position in which the heating and/or cooling system functions optimally. After that the spindle member 208 may be secured by placing it in the second spindle position 211. This way a device is provided, which makes it easy to shut down a heating and/or cooling system and to bring it back into operation such that the heating and/or cooling system functions optimally.

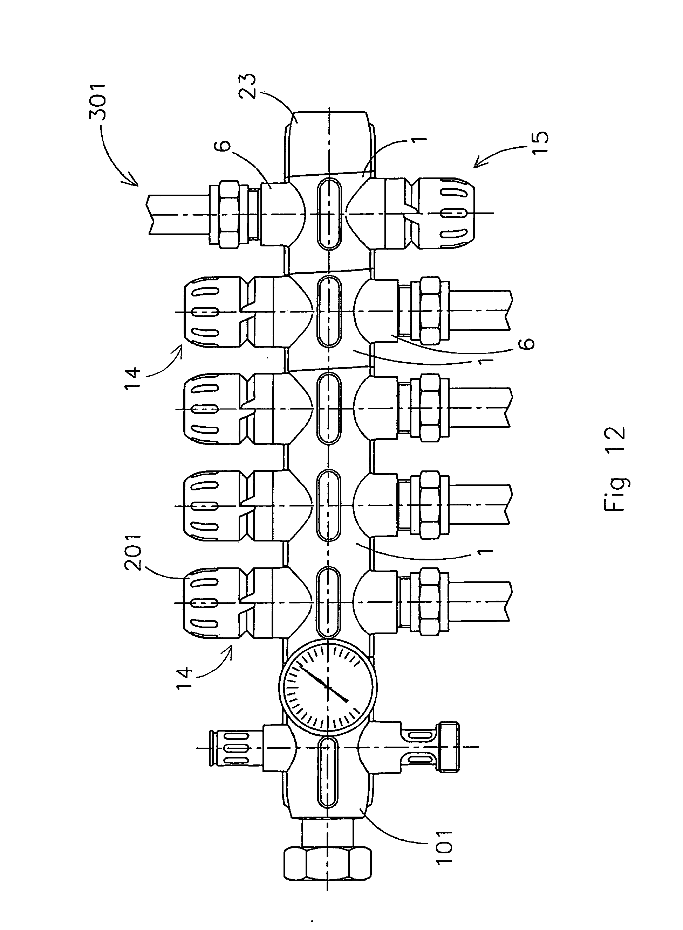

Figure 12 shows an embodiment of the fluid manifold according the invention. The fluid manifold 301 comprises a filling and venting device 101 and three manifold segments 1. In the manifold segment 1 which is directly connected to the filling and venting device 101 are three adjustment devices 201 integrated. In each of the other two manifold segments 1 is one adjustment device 201 integrated. Two manifold segments 1 are positioned in a first fixed position 14 in which the manifold ports 6 thereof direct in one direction and the other manifold segment 1 is positioned in a second fixed position 15 with a different angular orientation and in which the manifold port 6 thereof directs in the opposite direction. In this case the last manifold segment 1 is closed off on one side by an end cap 23 which is provided with a thread corresponding to that of the manifold segment 1, either male or female.

The following numbered paragraphs provide further disclosure of the present subject matter.
1. Manifold segment (1) for integration in a fluid manifold for a heating and/or cooling system, comprising a fluid tight body (3) comprising a fluid passage (4) for passing fluid in and/or out of the fluid tight body (3), wherein the fluid passage (4) comprises thread means (11) for in use connecting said fluid passage (4) to the manifold, such that the manifold segment is positioned in a fixed position relative to said manifold, characterised in that the thread means (11) comprise a multi thread (17) by which the manifold segment (1) is connectable in at least one further fixed position with a different angular orientation relative to the manifold.
2. Manifold segment according to paragraph 1, wherein the multi thread is a double thread (17) and the manifold segment is connectable to the manifold in two fixed positions; and/or
   wherein the manifold segment comprises positioning means (19) which are configured such that the positioning means (19) block the threading of the manifold segment (1) beyond one of the fixed positions; and
   wherein the positioning means (19) may comprise blocking means (20) for blocking the movement of the manifold segment (1) out of one of the fixed positions; and
   wherein the blocking means (20) may comprise a segment protrusion (21) or a segment receiving member (22) which in use co-operates with a segment receiving member (22) or a segment protrusion (21) of the manifold respectively; and/or
   wherein the manifold segment comprises two fluid passages (4,5), which fluid passages are in fluid connection with each other, and wherein one of the fluid passages comprises a male connection and the other of the fluid passages comprises a female connection; and
   wherein the two fluid passages (4,5) may direct in opposite directions; and/or wherein the two fluid passages (4,5) are substantially aligned; and/or
   wherein the manifold segment comprises a manifold port (6) for in use exchanging fluid with the heating and/or cooling system; and
   wherein the centre line (9) of the manifold port (6) and the centre line (8) of the fluid passage (4,5) may extend relative to each other under an angle of more than 90 degrees or less than 90 degrees; and/or
   wherein the manifold segment comprises an adjustment port (202) for holding adjustment means (204) for in use adjusting the fluid exchange of the manifold with the heating and/or cooling system; and
   wherein the adjustment port (202) may comprise said adjustment means (204); and/or
   wherein the manifold port (6) and the adjustment port (202) extend in opposite directions; and/or
   wherein the manifold segment comprises more than one manifold port and/or more than one adjustment port.
3. Assembly comprising a plurality of manifold segments according to any of the preceding paragraphs.
4. Assembly according to paragraph 3 in combination with paragraph 2, wherein each of the manifold segments (1) comprise a manifold port (6); and
   wherein the manifold segments (1) may be connectable to each other such that in one of the fixed positions of the manifold segments the manifold ports (6) direct in the same direction; and/or
   wherein the manifold segments (1) are connectable to each other such that in one of the fixed positions of the manifold segments the manifold ports (6) direct in opposite directions.
5. Fluid manifold for a heating system, comprising at least one of the manifold segments according to any of the paragraphs 1 - 2 or an assembly according to any of the paragraphs 3 - 4.
6. Filling and venting device (101) for integration in a fluid manifold of a heating and/or cooling system, comprising:
   - a fluid tight body (3) comprising:
      - a filling port (102) for in use filling the heating and/or cooling system with a fluid,
      - a first fluid passage (4) for passing fluid in and/or out of the fluid tight body,
      - a venting port (103) for in use venting the heating and/or cooling system,
      wherein the filling port (102) comprises a filling valve (107) for opening and closing the filling port, and wherein the venting port (103) comprises a venting valve (105) for opening and closing the venting port, characterised in that the filling valve (107) and venting valve (106) are identical.
7. Filling and venting device (101) according to paragraph 6, wherein the filling and venting device comprises a second fluid passage (5) for passing a fluid in and/or out of the fluid tight body (3) and wherein the first and second fluid passage (4,5) are in fluid connection with each other; and/or
   wherein the first fluid passage (4) and/or the second fluid passage (5) comprises connection means (10, 13) for in use connecting to the manifold; and/or
   wherein the filling valve (107) and/or venting valve (106) are located in the filling port (102) and/or venting port (103) respectively; and/or
   wherein the filling valve (107) and/or the venting valve (106) each comprise a fluid channel (110) for passing a fluid; and
   wherein the filling valve (107) and/or venting valve (106) may comprise connection means (108) for in use connecting a fluid feed to the fluid channel (110) of the filling valve and/or venting valve respectively; and/or
   wherein the filling valve (107) and/or the venting valve (106) comprises a rotatable member (109) for adjusting the filling valve and/or venting valve respectively; and
   wherein the connection means (108) may be connected to the filling valve (107) and/or venting valve (106) such that the rotatable member (109) is manually adjustable; and/or
   wherein the filling port (102) and the venting port (103) substantially direct in opposite directions; and/or
   wherein the filling port (102) and the venting port (103) are substantially aligned; and/or
   wherein the centre line (7) of the first fluid passage (4) extends substantially perpendicular to the centre line (104) of the filling port (102) and/or the centre line (105) of the venting port (103); and/or
   wherein the centre line (8) of the second fluid passage (5) extends substantially perpendicular to the centre line (104) of the filling port (102) and/or the centre line (5) of the venting port (103); and/or
   wherein the first and second fluid passage (4,5) direct in opposite directions; and/or
   wherein the first and/or the second fluid passage (4,5) comprise thread means (11a,11) which correspond with the thread means of the manifold segment (1) according to any of the paragraphs 1-2.
8. Assembly of at least one filling and venting device according to any of the paragraphs 6 -7, and at least one manifold segment (1) according to any of the paragraphs 1 - 2 or an assembly according to 3 - 4 or the fluid manifold according to paragraph 5.
9. Fluid manifold comprising a filling and venting device (101) according to any of the paragraphs 6-7.
10. Adjustment device (201) for integration in a fluid manifold of a heating and/or cooling system, comprising:
   - a fluid tight body (3) comprising:
      - a first fluid passage (4,5) for passing a fluid in and/or out of the fluid tight body,
      - a manifold port (6) for in use exchanging the fluid with the heating and/or cooling system,
      - an adjustment means (204) for adjusting said fluid exchange, which adjustment means is adjustable by rotating a spindle member (208) relative to the fluid tight body,
      - a positioning member (205) for restricting the rotation of the spindle member (208), which positioning member (205) is displaceable between a first member position (206) in which the positioning member (205) is rotatable substantially about the rotation axis of the spindle member (208) and a second member position (207) in which said rotation of the positioning member is blocked, characterised in that the spindle member (208) is displaceable between a first spindle position (210) in which the rotation of the spindle member (208) is rotatable and a second spindle position (211) in which the spindle member (208) is blocked.
11. Adjustment device (201) according to paragraph 10, wherein the positioning member (205) and/or the spindle member (208) are substantially axially displaceable along the rotation axis of the spindle; and/or
   wherein for restricting the rotation of the spindle member (208) the positioning member (205) comprises a first protrusion (213) and the spindle member comprises a second protrusion (214); and
   wherein the first and second protrusion may collide when rotating the spindle member (208) positioned in the first position; and/or
   wherein for blocking the rotation of the spindle member (208):
   - the positioning member (205) comprises a first receiving member (215) for receiving the second protrusion (214) of the spindle member (208); and/or
   - the spindle member (208) comprises a second receiving member (216) for receiving the first protrusion (213) of the positioning member (205); and/or
   wherein the positioning member (205) has the form of a ring coaxial arranged relative to the spindle member (208); and/or
   wherein the adjustment device (201) comprises control means for controlling the temperature and/or the flow rate of the fluid which in use is exchanged with the heating and/or cooling system; and/or
   wherein the adjustment device comprises a second fluid passage (5) for passing a fluid in and/or out the fluid tight body (3), wherein the first and second fluid passage (4,5) are in fluid connection with each other; and/or
   wherein the first and/or second fluid passage (4,5) comprise thread means (11) which correspond with the thread means of the manifold segment (1) according to any of the paragraphs 1-2; and/or
   wherein the adjustment device (201) comprises an adjustment port (202) in which the adjustment means (204) are located; and
   wherein the adjustment device (201) may be integrated in a manifold segment (1) according to any of the paragraphs 1-2.
12. Assembly of at least one adjustment device (201) according to any of the paragraphs 10-11 and at least one manifold segment (1) according to any of the paragraph 1 -2 and/or at least one filling and venting device (101) according to any of the paragraphs 6 -7.
13. Fluid manifold for a heating and/or cooling system, comprising an adjustment device (201) according to any of the paragraphs 10-11.
14. Fluid manifold in which the manifold according to paragraph 5 and/or the manifold according paragraph 9 and/or the manifold according to paragraph 13 are integrated.
15. Heating and/or cooling system comprising a fluid manifold according to any of the paragraphs 5, 9, 13 and 14.

It will be clear to the person skilled in the art that many variations of the shown embodiments are possible without departing from the scope of the claims.

## Claims

1. Adjustment device (201) for integration in a fluid manifold of a heating and/or cooling system, comprising:
- a fluid tight body (3) comprising:
- a first fluid passage (4,5) for passing a fluid in and/or out of the fluid tight body,
- a manifold port (6) for in use exchanging the fluid with the heating and/or cooling system,
- an adjustment means (204) for adjusting said fluid exchange, which adjustment means is adjustable by rotating a spindle member (208) relative to the fluid tight body,
- a positioning member (205) for restricting the rotation of the spindle member (208), which positioning member (205) is displaceable between a first member position (206) in which the positioning member (205) is rotatable substantially about the rotation axis of the spindle member (208) and a second member position (207) in which said rotation of the positioning member is blocked,
**characterised in that** the spindle member (208) is displaceable between a first spindle position (210) in which the rotation of the spindle member (208) is rotatable and a second spindle position (211) in which the spindle member (208) is blocked.

2. Adjustment device (201) according to claim 1, wherein the positioning member (205) and/or the spindle member (208) are substantially axially displaceable along the rotation axis of the spindle; and/or
wherein for restricting the rotation of the spindle member (208) the positioning member (205) comprises a first protrusion (213) and the spindle member comprises a second protrusion (214); and
wherein the first and second protrusion may collide when rotating the spindle member (208) positioned in the first position; and/or
wherein for blocking the rotation of the spindle member (208):
- the positioning member (205) comprises a first receiving member (215) for receiving the second protrusion (214) of the spindle member (208); and/or
- the spindle member (208) comprises a second receiving member (216) for receiving the first protrusion (213) of the positioning member (205); and/or
wherein the positioning member (205) has the form of a ring coaxial arranged relative to the spindle member (208); and/or
wherein the adjustment device (201) comprises control means for controlling the temperature and/or the flow rate of the fluid which in use is exchanged with the heating and/or cooling system; and/or
wherein the adjustment device comprises a second fluid passage (5) for passing a fluid in and/or out the fluid tight body (3), wherein the first and second fluid passage (4,5) are in fluid connection with each other; and/or
wherein the first and/or second fluid passage (4,5) comprise thread means (11) which correspond with the thread means of the manifold segment (1) according to any of the claims 11 -12; and/or
wherein the adjustment device (201) comprises an adjustment port (202) in which the adjustment means (204) are located; and
wherein the adjustment device (201) may be integrated in a manifold segment (1) according to any of the claims 11 - 12.

3. Assembly of at least one adjustment device (201) according to any of the claims 1 - 2 and at least one manifold segment (1) according to any of the claim 11 - 12 and/or at least one filling and venting device (101) according to any of the claims 7 - 8.

4. Fluid manifold for a heating and/or cooling system, comprising an adjustment device (201) according to any of the claims 1-2.

5. Fluid manifold in which the manifold according to claim 15 and/or the manifold according claim 10 and/or the manifold according to claim 4 are integrated.

6. Heating and/or cooling system comprising a fluid manifold according to any of the claims 4, 5, 10 and 15.

7. Filling and venting device (101) for integration in a fluid manifold of a heating and/or cooling system, comprising:
- a fluid tight body (3) comprising:
- a filling port (102) for in use filling the heating and/or cooling system with a fluid,
- a first fluid passage (4) for passing fluid in and/or out of the fluid tight body,
- a venting port (103) for in use venting the heating and/or cooling system,
wherein the filling port (102) comprises a filling valve (107) for opening and closing the filling port, and wherein the venting port (103) comprises a venting valve (105) for opening and closing the venting port, **characterised in that** the filling valve (107) and venting valve (106) are identical.

8. Filling and venting device (101) according to claim 7, wherein the filling and venting device comprises a second fluid passage (5) for passing a fluid in and/or out of the fluid tight body (3) and wherein the first and second fluid passage (4,5) are in fluid connection with each other; and/or
wherein the first fluid passage (4) and/or the second fluid passage (5) comprises connection means (10, 13) for in use connecting to the manifold; and/or
wherein the filling valve (107) and/or venting valve (106) are located in the filling port (102) and/or venting port (103) respectively; and/or
wherein the filling valve (107) and/or the venting valve (106) each comprise a fluid channel (110) for passing a fluid; and
wherein the filling valve (107) and/or venting valve (106) may comprise connection means (108) for in use connecting a fluid feed to the fluid channel (110) of the filling valve and/or venting valve respectively; and/or
wherein the filling valve (107) and/or the venting valve (106) comprises a rotatable member (109) for adjusting the filling valve and/or venting valve respectively; and
wherein the connection means (108) may be connected to the filling valve (107) and/or venting valve (106) such that the rotatable member (109) is manually adjustable; and/or
wherein the filling port (102) and the venting port (103) substantially direct in opposite directions; and/or
wherein the filling port (102) and the venting port (103) are substantially aligned; and/or
wherein the centre line (7) of the first fluid passage (4) extends substantially perpendicular to the centre line (104) of the filling port (102) and/or the centre line (105) of the venting port (103); and/or
wherein the centre line (8) of the second fluid passage (5) extends substantially perpendicular to the centre line (104) of the filling port (102) and/or the centre line (5) of the venting port (103); and/or
wherein the first and second fluid passage (4,5) direct in opposite directions; and/or
wherein the first and/or the second fluid passage (4,5) comprise thread means (11a,11) which correspond with the thread means of the manifold segment (1) according to any of the claims 11 - 12.

9. Assembly of at least one filling and venting device according to any of the claims 7 - 8, and at least one manifold segment (1) according to any of the claims 11 - 12 or an assembly according to 13 - 14 or the fluid manifold according to claim 15.

10. Fluid manifold comprising a filling and venting device (101) according to any of the claims 7-8.

11. Manifold segment (1) for integration in a fluid manifold for a heating and/or cooling system, comprising a fluid tight body (3) comprising a fluid passage (4) for passing fluid in and/or out of the fluid tight body (3), wherein the fluid passage (4) comprises thread means (11) for in use connecting said fluid passage (4) to the manifold, such that the manifold segment is positioned in a fixed position relative to said manifold, **characterised in that** the thread means (11) comprise a multi thread (17) by which the manifold segment (1) is connectable in at least one further fixed position with a different angular orientation relative to the manifold.

12. Manifold segment according to claims 11, wherein the multi thread is a double thread (17) and the manifold segment is connectable to the manifold in two fixed positions; and/or
wherein the manifold segment comprises positioning means (19) which are configured such that the positioning means (19) block the threading of the manifold segment (1) beyond one of the fixed positions; and
wherein the positioning means (19) may comprise blocking means (20) for blocking the movement of the manifold segment (1) out of one of the fixed positions; and
wherein the blocking means (20) may comprise a segment protrusion (21) or a segment receiving member (22) which in use co-operates with a segment receiving member (22) or a segment protrusion (21) of the manifold respectively; and/or
wherein the manifold segment comprises two fluid passages (4,5), which fluid passages are in fluid connection with each other, and wherein one of the fluid passages comprises a male connection and the other of the fluid passages comprises a female connection; and
wherein the two fluid passages (4,5) may direct in opposite directions; and/or
wherein the two fluid passages (4,5) are substantially aligned; and/or
wherein the manifold segment comprises a manifold port (6) for in use exchanging fluid with the heating and/or cooling system; and
wherein the centre line (9) of the manifold port (6) and the centre line (8) of the fluid passage (4,5) may extend relative to each other under an angle of more than 90 degrees or less than 90 degrees; and/or
wherein the manifold segment comprises an adjustment port (202) for holding adjustment means (204) for in use adjusting the fluid exchange of the manifold with the heating and/or cooling system; and
wherein the adjustment port (202) may comprise said adjustment means (204); and/or
wherein the manifold port (6) and the adjustment port (202) extend in opposite directions; and/or
wherein the manifold segment comprises more than one manifold port and/or more than one adjustment port.

13. Assembly comprising a plurality of manifold segments according to any of the claims 11 - 12.

14. Assembly according to claim 13 in combination with claim 12, wherein each of the manifold segments (1) comprise a manifold port (6); and
wherein the manifold segments (1) may be connectable to each other such that in one of the fixed positions of the manifold segments the manifold ports (6) direct in the same direction; and/or
wherein the manifold segments (1) are connectable to each other such that in one of the fixed positions of the manifold segments the manifold ports (6) direct in opposite directions.

15. Fluid manifold for a heating system, comprising at least one of the manifold segments according to any of the claims 11 - 12 or an assembly according to any of the claims 13 - 14.
